# EUROPÄISCHE PATENTSCHRIFT

(11) **EP 3 507 515 B1**
(45) Veröffentlichungstag und Bekanntmachung des Hinweises auf die Patenterteilung: **13.10.2021**
(21) Anmeldenummer: 17757538.8
(22) Anmeldetag: 24.08.2017
(51) Int. Cl.: F16C 33/34, F16C 33/52, F16C 41/00, F16C 19/52

(54) **WÄLZKÖRPER ZUR VERWENDUNG IN EINEM WÄLZLAGER**
ROLLING ELEMENT FOR USE IN A ROLLING-ELEMENT BEARING
ÉLÉMENT ROULANT DESTINÉ À ÊTRE UTILISÉ DANS UN PALIER À ROULEMENT

(30) Priorität: 30.08.2016 DE 102016116118
(43) Veröffentlichungstag der Anmeldung: 10.07.2019
(73) Patentinhaber: thyssenkrupp rothe erde Germany GmbH, 44137 Dortmund (DE); thyssenkrupp AG, 45143 Essen (DE)
(72) Erfinder: ELFERT, Gunther, 59597 Erwitte (DE); LÜNEBURG, Bernd, 45481 Mülheim (DE); ROLLMANN, Jörg, 59558 Lippstadt (DE); REIMANN, Manfred, 33758 Schloss Holte-Stukenbrock (DE)
(74) Vertreter: thyssenkrupp Intellectual Property GmbH
(86) Internationale Anmeldenummer: PCT/EP2017/071301
(87) Internationale Veröffentlichungsnummer: WO 2018/041704

(56) Entgegenhaltungen:
- EP-A1- 1 795 869
- DE-A1-102007 009 093
- DE-A1-102010 038 393
- DE-A1-102012 200 783
- DE-A1-102013 214 703
- DE-T2- 69 828 236
- DE-T5-112013 007 412
- DE-T5-112013 007 416
- US-A- 4 175 430
- US-A1- 2011 182 536
- US-A1- 2014 157 880

## Beschreibung

### Stand der Technik

Auf Großwälzlager, wie sie beispielsweise in Windkraftanlagen zum Einsatz kommen, wirken während des Betriebs erhebliche Kräfte. Daher ist es wünschenswert Belastungsmessungen des Wälzlagers durchführen zu können.

Zu diesem Zweck ist es beispielsweise aus der EP 0 637 734 B1 bekannt, mit Hilfe von Dehnungsmessstreifen, die in einer Bohrung eines Wälzkörpers angeordnet sind, die Verformungen des Wälzkörpers zu messen, wobei aus den Verformungen des Wälzkörpers auf die auf das Wälzlager einwirkenden Kräfte, also die Belastungen, geschlossen werden kann. Um den Dehnungsmessstreifen und einen damit verbundenen Verstärker sowie einen Transmitter mit Energie zu versorgen, ist in dem Wälzkörper ferner eine erste Spule angeordnet, die induktiv durch eine an einem nicht drehbaren Lagerring des Wälzlagers angeordnete, zweite Spule mit Energie versorgt wird.

Zur Energieversorgung der zweiten Spule ist eine aufwändige und im Betrieb störende Verkabelung des Wälzlagers nötig. Ferner sind die Dehnungsmessstreifen und ihre jeweilige Befestigung, im Regelfall eine Klebung, verschleissanfällig, insbesondere da sie in den Wälzlagern in der Regel mit Fetten und/oder anderen Schmierstoffen in Kontakt kommen, und müssen daher regelmäßig ersetzt werden. Daher ist eine solche Belastungsmessung nur unter Laborbedingungen möglich.

Weiterhin ist es aus der EP 1 849 013 B1 bekannt, Sensoren an einem die Wälzkörper in ihrer relativen Lage zueinander fixierenden Käfig anzuordnen, wobei die Sensoren Wirbelströme messen, die in den Wälzkörpern durch Spulen induziert werden. Aus den Wirbelstrommessungen dann auf die herrschenden Belastungen geschlossen werden. Auch hier erfolgt eine Energieversorgung induktiv durch eine im Außenring angeordnete Energieübertragungsspule. Daraus ergeben sich erneut die bereits angesprochenen Nachteile.

Aus DE 698 28 236 T2 ist ein Wälzlager mit einem Drehsystem bekannt, das mindestens einer Reihe von Wälzkörpern und einen Wälzkörperkäfig umfasst, wobei das Drehsystem ein Energie verbrauchendes Organ und eine elektrische Energieversorgungseinrichtung umfasst, die aus mechanischer Energie elektrische Energie erzeugt. Die elektrische Energieversorgungseinreichtung ist mit einem Wälzkörper verbunden und elastisch mit einem außerhalb des Wälzkörpers befindlichen Organ, zum Beispiel dem Wälzkörperkäfig gekuppelt.

DE 10 2007 009 093 A1 beschreibt einen Wälzkörper mit einem RFID-Tag und einem Generator als Energiequelle, der dazu ausgebildet ist, aus Änderungen des Bewegungszustands des Wälzkörpers relativ zu den Laufflächen, d.h. aus Beschleunigungsvorgängen, elektrische Energie zu erzeugen.

Aus DE 11 2013 007 416 T5 ist ein Wälzkörper mit einem Generator bekannt, der eine Generatorwelle aufweist. Am Wellenende der Generatorwelle ist ein Dauermagnet bereitgestellt, der mit einem auf dem Käfig bereitgestellten Magneten wechselwirkt. Die Formen der Magnetisierung der beiden Magneten sind identisch, worin eine relative Drehung möglich ist, falls eine Magnetkraft, die einen Drehimpuls erzeugt, überwunden wird. Der Drehimpuls stellt die relative Ausrichtung der Magneten gegenüber der restlichen Konfiguration mit minimaler Magnetfeldenergie wieder her, in der die Magnetisierungsrichtungen der beiden Magneten einander entgegengesetzt sind.

DE 11 2013 007 412 T5 beschreibt eine Sensorrolle mit den Merkmalen nach dem Oberbegriff des Anspruchs 1. Die Sensorrolle ist in einen Käfig zwischen einem Innenring und einem Außenring angeordnet und ist mit einer Bohrung ausgestattet, die eine Sensoreinheit und einen ersten Abschnitt einer Generatorbaugruppe aufnimmt. Ein zweiter Abschnitt der Generatorbaugruppe wird vom Käfig bereitgestellt, wobei wenigstens ein Magnetkreis der Generatorbaugruppe vom zweiten Abschnitt als Funktion einer relativen Rotation zwischen Käfig und Sensorrolle geöffnet und geschlossen wird. Einschränkungen sind durch den maximalen Miniaturisierungsgrad für die in der Bohrung der Laufrolle unterzubringende Generatorbaugruppe, sowie die Leistungsmenge, die bei einer gewissen Rotationsgeschwindigkeit zu generieren ist, gegeben.

Aus US 4 174 430 A ist eine weitere Vorrichtung zur Lastmessung in einem Wälzlager bekannt.

Alternativ offenbart die Druckschrift EP 1 795 869 A1 einen Wälzkörper mit einer Bohrung, in dem zwei Platten parallel und voneinander beabstandet angeordnet sind, wobei auf den Platten gegenüberliegend jeweils eine Elektrode angebracht ist, die kapazitiv den Abstand der Platten zueinander messen. Dieser Abstand ist veränderlich, da sie die Platten durch die belastungsinduzierte Verformung des Wälzkörpers verbiegen. Diese Messung ist auf einen Bereich des Wälzkörpers beschränkt und ist durch die Verbiegung der Platinen ebenfalls verschleißanfällig. Auch wird erneut eine externe Energieversorgung offenbart, welche nachteilig ist, da sie eine Verkabelung des Wälzlagers erfordert. Zudem können die Platten sich gegeneinander verschieben, was zu Messungenauigkeiten führt.

### Offenbarung der Erfindung

Es ist also eine Aufgabe der vorliegenden Erfindung Wälzkörper und ein Wälzlager zur Verfügung zu stellen, mit welchen auch während des laufenden Betriebs eine zuverlässige und dauerhafte Belastungsmessung möglich ist, insbesondere ohne dass eine Verkabelung des Wälzlagers erforderlich ist.

Gelöst wird diese Aufgabe mit einem Wälzkörper zur Verwendung in einem Wälzlager, mit einem Außenmantel und einer Bohrung, wobei die Bohrung entlang einer Mittelachse des Wälzkörpers vorgesehen ist, wobei der Wälzkörper wenigstens einen in der Bohrung angeordneten Sensor zur Belastungsmessung und ein Funkmodul zur Übertragung der von dem Sensor gemessenen Daten umfasst, wobei der Wälzkörper einen Mikrogenerator umfasst, wobei der Mikrogenerator zur Bereitstellung der zum Betrieb des Sensors und/oder des Funkmoduls benötigten Energie vorgesehen ist. Vorzugsweise ist der Außenmantel wenigstens teilweise als Laufläche vorgesehen, auf der Lagerringe, insbesondere ein Außenring und ein Innenring, des Wälzlagers abrollen. Dabei ist vorzugsweise einer der Lagerringe drehfest vorgesehen, insbesondere der Außenring, während der andere Lagerring konzentrisch dazu und drehbar vorgesehen ist. Vorzugsweise ist der Wälzkörper zylinderförmig, tonnenförmig, toroidal und/oder kegelförmig ausgebildet. In diesem Fall weist der Wälzkörper eine Haupterstreckungsrichtung auf, wobei die Mittelachse parallel zu der Haupterstreckungsrichtung angeordnet ist. Besonders bevorzugt ist der Wälzkörper im Wesentlichen rotationssymmetrisch um die Mittelachse vorgesehen, insbesondere in dem Bereich zwischen der Bohrungswandung und dem Außenmantel. Der Außenmantel entspricht insbesondere einer äußeren Mantelfläche des Wälzkörpers. Beispielsweise weist der Wälzkörper die Form eines 104 mm langen Zylinders auf mit einem Durchmesser von 65 mm. In diesem Fall hat die Bohrung vorzugsweise einen Durchmesser von 20 mm. Vorzugsweise sind auch das Funkmodul und/oder der Mikrogenerator wenigstens teilweise in der Bohrung angeordnet. Ein Mikrogenerator im Rahmen dieser Anmeldung ist dabei insbesondere eine Vorrichtung mit geringen Abmessungen, welche aus der Umgebung Energie gewinnt und somit eine autonome Energiequelle darstellt. Besonders bevorzugt bedient sich der Mikrogenerator dabei wenigstens einem Verfahren des sogenannten Energy Harvesting. Der Mikrogenerator ist dazu vorgesehen, aus der Abroll- bzw. Drehbewegung des Wälzkörpers Energie zu gewinnen, die er dann zum Betrieb des Sensors und/oder des Funkmoduls zur Verfügung stellt.

Der erfindungsgemäße Wälzkörper hat gegenüber dem Stand der Technik den Vorteil, dass der Wälzkörper über eine integrierte und autonome Energieversorgung verfügt und durch das Funkmodul die Daten kabellos überträgt, so dass keine Verkabelung des Wälzkörpers oder eines der Lagerringe und damit des Wälzlagers nötig ist. Ferner stellt der erfindungsgemäße Wälzkörper präzise Belastungsmessungen zur Verfügung und ermöglicht dies insbesondere auch während des laufenden Betriebs eines mit dem erfindungsgemäßen Wälzkörper ausgestatteten Wälzlagers.

Vorteilhafte Ausgestaltungen und Weiterbildungen der Erfindung können den Unteransprüchen, sowie der Beschreibung unter Bezugnahme auf die Zeichnungen entnommen werden.

Gemäß einer bevorzugten Ausführungsform der vorliegenden Erfindung ist vorgesehen, dass der Sensor ein kapazitiver Sensor ist, wobei der Sensor zur Messung eines Abstands zwischen dem Sensor und der Bohrungswandung vorgesehen ist. Abhängig von den auf das Wälzlager und damit auf den Wälzkörper einwirkenden Kräften wird der Wälzkörper verformt, was anhand einer Änderung des Querschnitts der Bohrung messbar ist. Besonders bevorzugt ist der Sensor zur Übermittlung der gemessenen Daten an das Funkmodul konfiguriert, wobei das Funkmodul zur Übertragung der gemessenen Daten konfiguriert ist, beispielsweise an ein geeignetes Empfangsgerät. Ganz besonders bevorzugt umfasst der kapazitive Sensor ein Dielektrikum. Noch mehr bevorzugt umfasst die Bohrungswandung wenigstens teilweise ein wenigstens teilweise elektrisch leitfähiges Material. Beispielsweise ist der Wälzkörper aus einem elektrisch leitfähigen Material gefertigt und/oder weist auf der Bohrungswandung eine elektrisch leitfähige Beschichtung auf. Als elektrisch leitfähiges Material kommt insbesondere ein metallisches Material in Frage. Hierdurch wird in vorteilhafter Weise eine präzise und einfache Belastungsmessung ermöglicht.

Gemäß einer weiteren bevorzugten Ausführungsform ist vorgesehen, dass in der Bohrung wenigstens zwei voneinander entlang der Mittelachse beabstandete Sensoren angeordnet sind. Hierdurch wird es in vorteilhafter Weise ermöglicht, zusätzlich zu Kräften auch eine Verkippung des Wälzkörpers zu messen, indem die gemessenen Daten der Sensoren ausgewertet, insbesondere verglichen, werden.

Gemäß einer weiteren bevorzugten Ausführungsform ist vorgesehen, dass in axialer Richtung auf der Höhe des Sensors, besonders bevorzugt diesem bezüglich der Mittelachse gegenüberliegend, ein Mittel zum Herstellen eines definierten Abstandes zu der Bohrungswandung vorgesehen ist, wobei das Mittel insbesondere einen Magneten und/oder ein Federmittel umfasst. Ganz besonders bevorzugt ist das Mittel ein Rollenkontaktblock, wobei der Rollenkontaktblock einen Magneten aufweist, durch den er an die Bohrungswandung gezogen wird, insbesondere derart, dass der Rollenkontaktblock an der Bohrungswandung wenigstens teilweise anliegt. Hierdurch wird in vorteilhafter Weise die Präzision der Belastungsmessung weiter erhöht, da sichergestellt wird, dass der Sensor als Abstand die gesamte Verformung des Wälzkörpers messen kann. Vorzugsweise beträgt der Abstand zwischen dem Sensor und der Bohrungswand mindestens 50 µm und maximal 150 µm. Besonders bevorzugt beträgt der Abstand zwischen dem Sensor und der Bohrungswandung in einem lastlosen Zustand 100 µm, wenn das Mittel an der Bohrungswandung anliegt. Vorzugsweise ist der kapazitive Sensor mit dem Mittel elektrisch über einen Schwingkreis gekoppelt. Der Schwingkreis wird durch zwischen der Bohrung und dem Außenmantel auf einer Kreisbahn angeordneten Spulen erzeugt. Die Spulen können dabei gleichmäßig beabstandet sein.

Hierdurch wird es vorteilhafterweise ermöglicht, dass eine Frequenz, mit der das System schwingt, gemessen wird, die wiederum mit dem Betrag der Verformung und damit der Belastung, in Beziehung steht. Ein solches Schwingkreissystem ist vorteilhafterweise unempfindlicher gegenüber Störungen.

Gemäß einer weiteren bevorzugten Ausführungsform ist vorgesehen, dass in der Bohrung eine Platine angeordnet ist, wobei das Funkmodul, der Mikrogenerator, der kapazitive Sensor und/oder das Mittel an der Platine befestigt sind. Besonders bevorzugt weist die Platine eine Dicke von 1 mm bis 2 mm, insbesondere 1,6 mm, auf. Hierdurch wird in vorteilhafter Weise eine einfache Installation der einzelnen Komponenten in dem Wälzkörper ermöglicht. Gemäß einer weiteren bevorzugten Ausführungsform ist vorgesehen, dass der Wälzkörper ferner einen Energiespeicher umfasst, wobei der Energiespeicher zur Speicherung der von dem Mikrogenerator erzeugten Energie vorgesehen ist. Besonders bevorzugt ist der Energiespeicher auf der Platine vorgesehen. Ganz besonders bevorzugt ist der Energiespeicher ein Akkumulator und/oder ein Kondensator, insbesondere ein hochkapazitiver Kondensator, z.B. ein sogenannter Green-Cap-Kondensator.

Gemäß einer weiteren bevorzugten Ausführungsform ist vorgesehen, dass das Funkmodul zur Übertragung der gemessenen Daten in einem Frequenzbereich von 100 MHz bis 6 GHz, vorzugsweise von 300 MHz bis 2 GHz, besonders bevorzugt von 700 MHz bis 1 GHz, insbesondere mit einer Frequenz von 833 MHz, vorgesehen ist. Hierdurch wird in vorteilhafter Weise eine kabellose Datenübertragung ermöglicht, die auch durch ggf. metallische Komponenten des Wälzkörpers oder des Wälzlagers nicht gestört wird und eine hinreichend große Übertragungsreichweite aufweist.

Gemäß einer weiteren bevorzugten Ausführungsform ist vorgesehen, dass die Bohrung einen Durchmesser von 5 mm bis 50 mm, vorzugsweise von 10 mm bis 30 mm, insbesondere einen Durchmesser von 20 mm, aufweist, und/oder dass der Wälzkörper vorzugsweise zylinderförmig ausgebildet ist und besonders bevorzugt eine Länge von 90 mm bis 110 mm, insbesondere 104 mm, sowie ganz besonders bevorzugt einen Durchmesser von 60 mm bis 70 mm, insbesondere 65 mm, aufweist. Hierdurch wird einerseits eine hinreichend große Bohrung zur Unterbringung sämtlicher Komponenten zur Verfügung gestellt, andererseits ist bei einer Bohrung mit den oben genannten Maßen der zur Verfügung stehende Verformungsspielraum groß genug für eine präzise Messung, insbesondere ohne die strukturelle Stabilität des Wälzkörpers zu beeinträchtigen.

Gemäß einer weiteren bevorzugten Ausführungsform ist vorgesehen, dass an der Bohrungswandung, insbesondere in radialer Richtung wenigstens teilweise umlaufend, ein Dehnungsmessstreifen angeordnet ist. Hierdurch ist es vorteilhafterweise möglich, zusätzlich zu der präzisen kapazitiven Messung, eine redundante und bewährte Messmethode mit geringem Aufwand zu implementieren.

Es ist vorgesehen, dass der Mikrogenerator ein induktiver Generator ist. Der induktive Generator wirkt mit Magneten zusammen, die an einem Käfig eines Wälzlagers angeordnet sind. Hierdurch ist es in besonders vorteilhafter Weise möglich, eine autonome Energieversorgung bereitzustellen, die insbesondere auch nur dann Energie zur Verfügung stellt, wenn sie benötigt wird, nämlich bei einer Drehung des Wälzkörpers. In Kombination mit Magneten ist dabei vorteilhafterweise weiterhin keine Verkabelung des Wälzlagers nötig.

Gemäß einer weiteren bevorzugten Ausführungsform ist vorgesehen, dass der Wälzkörper ein Mittel zur Positionsbestimmung umfasst. Besonders bevorzugt ist das Mittel wenigstens ein Magnet, insbesondere ein Diametralmagnet. Dieser wirkt ganz besonders bevorzugt mit einem Detektionsmittel zur Bestimmung der Position des Wälzkörpers zusammen, wobei das Wälzlager das Detektionsmittel umfasst, insbesondere der Innenring, der Außenring und/oder der Käfig. Hierdurch ist es in besonders vorteilhafter Weise möglich, die absolute und/oder relative Position des Wälzkörpers in dem Wälzlager zu bestimmen.

Ein weiterer Gegenstand der vorliegenden Erfindung ist ein Wälzlager, insbesondere ein Großwälzlager, mit einem ersten Lagerring und einem um eine Drehachse drehbaren, und insbesondere konzentrisch zu dem ersten Lagerring angeordneten zweiten Lagerring, sowie einer Vielzahl von zwischen dem ersten Lagerring und dem zweiten Lagerring angeordneten Wälzkörpern, wobei wenigstens ein Wälzkörper ein erfindungsgemäßer Wälzkörper ist. Vorzugsweise ist der erste Lagerring ein Außenring und/oder der zweite Lagerring ein Innenring. Hierdurch ist es vorteilhaft möglich, ein Wälzlager bereitzustellen, welches ohne zusätzlichen Montageaufwand eine, insbesondere dauerhafte, kabellose Belastungsmessung ermöglicht.

Gemäß einer bevorzugten Ausführungsform ist vorgesehen, dass das Wälzlager ein Detektionsmittel zur Bestimmung der Position des Wälzkörpers umfasst. Besonders bevorzugt wirkt das Detektionsmittel mit einem Mittel zur Positionsbestimmung des Wälzkörpers zusammen, wobei der Wälzkörper das Mittel zur Positionsbestimmung umfasst. Ganz besonders bevorzugt ist vorgesehen, dass der Innenring, der Außenring und/oder der Käfig das Detektionsmittel aufweist. Hierdurch ist es in besonders vorteilhafter Weise möglich, die absolute und/oder relative Position des Wälzkörpers in dem Wälzlager zu bestimmen.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Perspektivansicht eines Wälzkörpers gemäß einer beispielhaften Ausführungsform der vorliegenden Erfindung.
- **Figur 2**: zeigt eine weitere schematische Perspektivansicht eines Wälzkörpers gemäß einer beispielhaften Ausführungsform der vorliegenden Erfindung.
- **Figur 3**: zeigt eine schematische Schnittdarstellung senkrecht zur Mittelachse eines Wälzkörpers gemäß einer beispielhaften Ausführungsform der vorliegenden Erfindung mit einem Käfig eines Wälzlagers.
- **Figur 4**: zeigt eine schematische Schnittdarstellung parallel zu der Mittelachse eines Wälzkörpers gemäß einer beispielhaften Ausführungsform der vorliegenden Erfindung.
- **Figur 5**: zeigt ein schematisches Ersatzschaltbild der Spulen aus den Figuren 3 und 4 gemäß einer beispielhaften Ausführungsform der vorliegenden Erfindung.
- **Figur 6**: zeigt einen schematischen Querschnitt einer Bohrung eines Wälzkörpers gemäß einer beispielhaften Ausführungsform der vorliegenden Erfindung.
- **Figur 7**: zeigt eine Platine eines Wälzkörpers gemäß einer beispielhaften Ausführungsform der vorliegenden Erfindung.
- **Figur 8**: zeigt eine schematische Perspektivansicht eines Wälzkörpers gemäß einer beispielhaften Ausführungsform der vorliegenden Erfindung.
- **Figur 9**: zeigt eine schematische Perspektivansicht einer Platine eines Wälzkörpers gemäß einer beispielhaften Ausführungsform der vorliegenden Erfindung.
- **Figur 10**: zeigt eine Perspektivansicht eines Wälzlagers gemäß einer beispielhaften Ausführungsform der vorliegenden Erfindung.
- **Figur 11**: zeigt eine perspektivische Detailansicht eines Wälzlagers gemäß einer beispielhaften Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

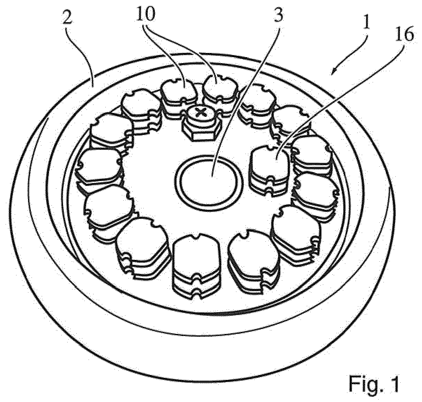

In **Figur 1** ist eine schematische Perspektivansicht eines Wälzkörpers 1 gemäß einer beispielhaften Ausführungsform der vorliegenden Erfindung dargestellt. Ein derartiger Wälzkörper 1 wird in Wälzlagern eingesetzt und dient der beweglichen Führung eines ersten Lagerrings 11 und eines zweiten Lagerrings 12 zueinander, insbesondere eines in einem drehfest angeordneten Außenring 11 angeordneten Innenrings 12. Dabei sind üblicherweise zwischen Außenring 11 und Innenring 12 eine Vielzahl von Wälzkörpern vorgesehen, die auf Laufflächen des Außenrings 11 und des Innenrings 12 abrollen. Vorliegend handelt es sich um eine sogenannte Messrolle, also einen Wälzkörper 1, der zur Belastungsmessung in dem Wälzlager vorgesehen und ausgebildet ist.

Der Wälzkörper 1 umfasst hier einen zylindrischen oder im Wesentlichen kegelförmigen Körper mit einem Außenmantel 2 der als Lauffläche dient und auf der der Außenring 11 und der Innenring 12 abrollen. Der Wälzkörper 1 weist in seiner Mitte eine Bohrung 3 auf, die konzentrisch um die Mittelachse des Wälzkörpers 1 herum ausgebildet ist. Zu sehen sind zudem eine Vielzahl von Spulen 10, die hier auf einer Kreisbahn zwischen der Bohrung 3 und dem Außenmantel 2 angeordnet sind. Hierbei handelt es sich um vierzehn Spulen 10, die jeweils um ca. 25° versetzt angeordnet sind, wobei durch Anlegen eines Stroms bzw. einer Spannung benachbarte Spulen ein jeweils entgegengesetzt gerichtetes Magnetfeld erzeugen. Durch Anlegen einer Wechselspannung wird ein Schwingkreis erzeugt. Dieser wird im Zusammenhang mit den nachfolgenden Figuren näher erläutert.

Ferner weist der Wälzkörper 1 ein Mittel zur Positionsbestimmung 16 auf, hier ein Diametralmagnet, der mit einem Detektionsmittel zusammenwirkt, um die absolute und/oder relative Position des Wälzkörpers 1 in dem Wälzlager zu bestimmen. Dabei weist beispielsweise der Käfig 13 das Detektionsmittel auf. In diesem Fall ist die relative Position die Position des Wälzkörpers 1 relativ zu dem Käfig 13, insbesondere relativ zu einem Referenzpunkt.

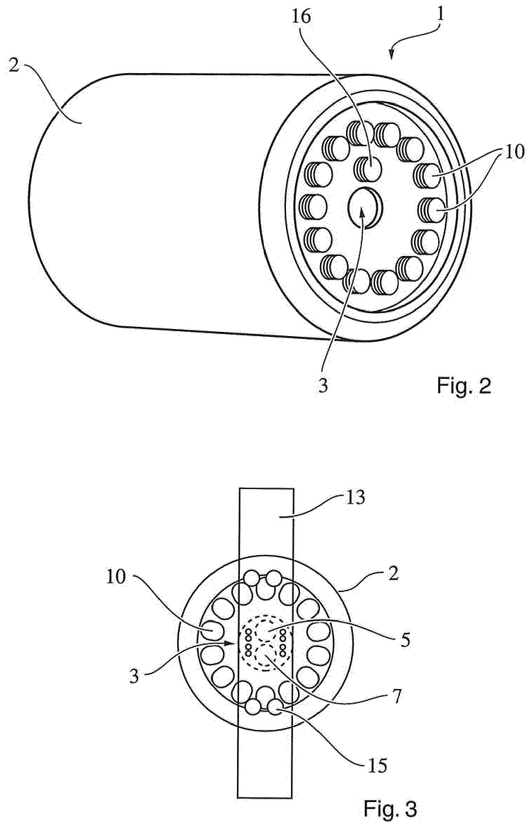

In **Figur 2** ist eine weitere schematische Perspektivansicht eines Wälzkörpers 1 gemäß einer beispielhaften Ausführungsform der vorliegenden Erfindung dargestellt. Dabei entspricht die dargestellte Ausführungsform im Wesentlichen der in Figur 1 dargestellten Ausführungsform, so dass generell auf die diesbezüglichen Ausführungen verwiesen wird. Es ist hier gut zu erkennen, dass der Wälzkörper 1 im Wesentlichen zylinderförmig ist. In der Bohrung 3 ist dabei eine im Folgenden näher zu erläuternde Messanordnung vorgesehen.

In **Figur 3** ist eine schematische Schnittdarstellung senkrecht zur Mittelachse eines Wälzkörpers 1 gemäß einer beispielhaften Ausführungsform der vorliegenden Erfindung mit einem Käfig 13 eines Wälzlagers dargestellt. Dabei entspricht die dargestellte Ausführungsform im Wesentlichen den in den vorherigen Figuren dargestellten Ausführungsformen, so dass generell auf die diesbezüglichen Ausführungen verwiesen wird. In der Bohrung ist ein Sensor 5, hier ein kapazitiver Sensor 5, ein Funkmodul 6 und ein Mikrogenerator 4 vorgesehen. Der Mikrogenerator ist hier ein induktiver Mikrogenerator. Damit die Wälzkörper eines Wälzlagers für eine gleichmäßige Lastverteilung regelmäßig beabstandet bleiben, ist zwischen dem Außenring 11 und dem Innenring 12 ein Käfig 13 angeordnet, der die Wälzkörper umfasst. D.h. die Wälzkörper sind drehbar, aber bezüglich des Käfigs 13 an festen Positionen gelagert. An der Stelle des Wälzkörpers 1 umfasst der Käfig 13 Magnete 15, hier vier Magnete 15.

Diese Magnete 15 ermöglichen es dem Mikrogenerator 4 einen Strom zu induzieren und somit eine Energieversorgung für den Sensor 5 und das Funkmodul 6 sowie die Spulen 10 bereitzustellen. Alternativ oder zusätzlich und im Rahmen der vorliegenden Erfindung bevorzugt ist der Mikrogenerator derart vorgesehen, dass er alleine aus der Bewegung, d.h. dem Abrollen, des Wälzkörpers Energie generiert.

Der Sensor 5 ist auf einer hier nicht dargestellten Platine 8 angeordnet. Auf der anderen Seite der Platine 8, also bezüglich der Mittelachse dem Sensor 5 gegenüberliegend, ist ein Mittel 7 zum Herstellen eines definierten Abstandes zu der Bohrungswandung angeordnet. Dieses Mittel 7 ist hier ein Rollenkontaktblock mit einem darin angeordneten Magneten 14. Der Magnet sorgt dafür, dass der Rollenkontaktblock in Kontakt mit der Bohrungswandung gerät, da er von den Magnetfeldern der Spulen 10 wechselnd angezogen wird. Hierdurch führt das Mittel 7 mit der Platine 8 und somit auch dem Sensor 5 eine Oszillation aus, deren Frequenz zum Einen durch die Spulen 10 und zum Anderen von dem Abstand zwischen Mittel 7 und der Bohrungswandung bzw. dem Abstand zwischen dem Sensor 5 und der Bohrungswandung abhängt, sowie natürlich von den Eigenschafften des Rollenkontaktblocks, z.B. seiner Masse und der Stärke des Magneten 14. Der kapazitive Sensor 5 misst also eine Frequenz, die mit einem Abstand von der Bohrungswandung korrespondiert. Wird nun durch auf den Wälzkörper 1 wirkende Kräfte, also Belastungen, der Wälzkörper 1 verformt, so verformt sichauch die Bohrung 3. Der Abstand zwischen dem kapazitiven Sensor 5 und der Bohrungswandung verändert sich also und damit auch die gemessene Frequenz. Die gemessene Frequenz wird an das Funkmodul 6 übermittelt, welche sie aus dem Wälzkörper kabellos überträgt. Denkbar ist auch, dass zuvor aus den gemessenen Daten eine Verformung bzw. Belastung ermittelt wird, die dann übertragen wird.

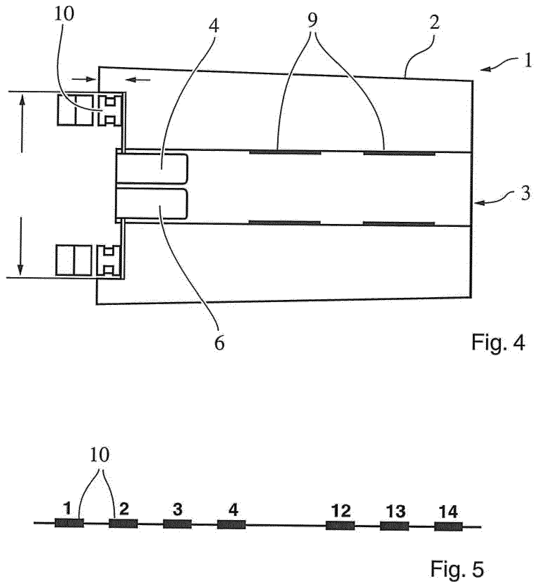

In **Figur 4** ist eine schematische Schnittdarstellung parallel zu der Mittelachse eines Wälzkörpers 1 gemäß einer beispielhaften Ausführungsform der vorliegenden Erfindung dargestellt. Dabei entspricht die dargestellte Ausführungsform im Wesentlichen der in Figur 3 dargestellten Ausführungsform, so dass generell auf die diesbezüglichen Ausführungen verwiesen wird. Hier ist insbesondere die Bohrung 3 zu erkennen, sowie schematisch der Mikrogenerator 4 und das Funkmodul 6.

In **Figur 5** ist ein schematisches Ersatzschaltbild der Spulen 10 aus den Figuren 3 und 4 gemäß einer beispielhaften Ausführungsform der vorliegenden Erfindung dargestellt. Die Spulen 10 stellen dabei Widerstände dar, die in Reihe geschaltet sind. Gemäß den zuvor beschriebenen Darstellungen sind hier vierzehn Spulen 10, entsprechend vierzehn Widerständen, vorgesehen.

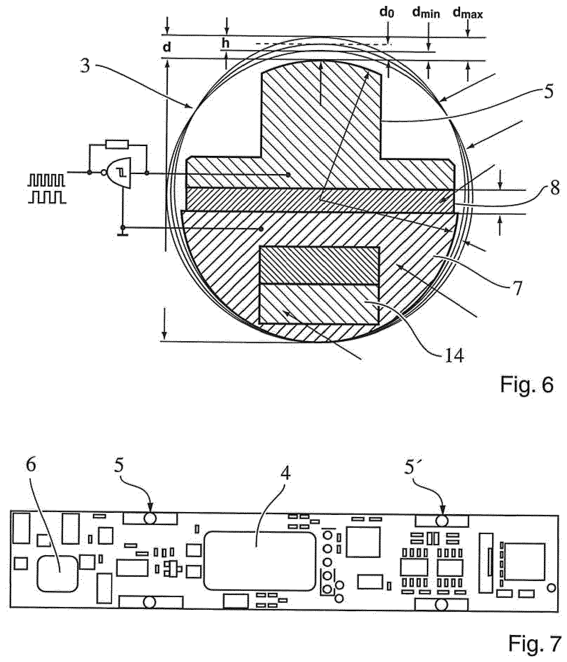

In **Figur 6** ist ein schematischer Querschnitt einer Bohrung 3 eines Wälzkörpers 1 gemäß einer beispielhaften Ausführungsform der vorliegenden Erfindung dargestellt. Hier ist deutlich die Platine 8 zu erkennen, wobei auf der einen Seite der Platine 8 der kapazitive Sensor 5 und auf der anderen Seite das Mittel 7 mit dem Magneten 14 angeordnet ist. Zudem sind verschiedene Verformungen bzw. Abstände d eingezeichnet. In der dargestellten Ausführungsform beträgt der Abstand d₀ zwischen kapazitiven Sensor 5 und der Bohrungswandung in einem lastlosen Zustand ca. 100 µm, wobei der Magnet 14 des Mittels 7 den Rollenkontaktblock in Kontakt zu der Bohrungswandung gebracht hat. Je nachdem, ob die Bohrung gestaucht oder gedrückt wird, ändert sich der Abstand, also die Verformung zwischen einem minimalen Wert dₘᵢₙ von 50 µm und einem maximalen Wert dₘₐₓ von 150 µm. Auf der linken Seite der Darstellung ist schematisch ein Schwingkreis dargestellt. Diesbezüglich wird auf die Ausführungen zu Figur 4 verwiesen. Der kapazitive Sensor 5 und der Rollenkontaktblock haben dabei wenigstens teilweise eine Außenkontur, die der Kontur der Bohrungswandung in einem lastlosen Zustand folgt, also zu der Bohrungswandung konzentrisch ist.

In **Figur 7** ist eine Platine 8 eines Wälzkörpers 1 gemäß einer beispielhaften Ausführungsform der vorliegenden Erfindung dargestellt. Aus Gründen der Übersichtlichkeit sind dabei nicht alle Elemente dargestellt. In der Mitte ist die Stelle sichtbar, die zur Anbringung des Mikrogenerators 4 vorgesehen ist Zu beiden Seiten dieser Stelle und an beiden Rändern der Platine 8 sind Befestigungsstellen zu sehen, die der Befestigung von zwei kapazitiven Sensoren 5, 5' dienen. Diese zwei voneinander entlang der Mittelachse beabstandeten Sensoren 5 ,5' ermöglichen eine relative Messung zueinander und damit zusätzlich zu einer reinen Kräftemessung entlang dreier Achsen auch die Messung einer Verkippung des Wälzkörpers 1, also einer entlang der Mittelachse unterschiedlich starken Verformung des Wälzkörpers 1. Ferner ist lediglich beispielshaft ein Funkmodul 6 dargestellt. Die Platine 8 ist derart bemessen, dass sie in die Bohrung 3 passt und vorzugsweise eine geringe seitliche Toleranz aufweist.

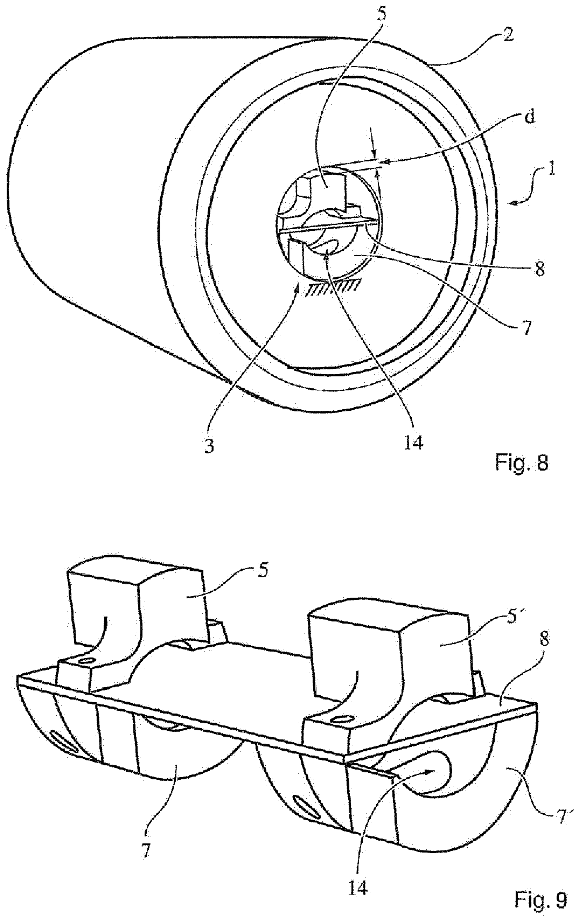

In **Figur 8** ist eine schematische Perspektivansicht eines Wälzkörpers 1 gemäß einer beispielhaften Ausführungsform der vorliegenden Erfindung dargestellt. Dabei entspricht die dargestellte Ausführungsform im Wesentlichen den in den vorherigen Figuren dargestellten Ausführungsformen, so dass generell auf die diesbezüglichen Ausführungen verwiesen wird. Hier ist insbesondere gut die in die Bohrung 3 eingesetzte Platine 8 mit dem Sensor 5 und dem Mittel 7 erkennbar.

In **Figur 9** ist eine schematische Perspektivansicht einer Platine 8 eines Wälzkörpers 1 gemäß einer beispielhaften Ausführungsform der vorliegenden Erfindung dargestellt. Dabei entspricht die dargestellte Ausführungsform im Wesentlichen der in Figur 7 dargestellten Ausführungsform, so dass generell auf die diesbezüglichen Ausführungen verwiesen wird. Auch hier sind zwei kapazitive Sensoren 5, 5' und entsprechend zwei Mittel 7, 7' in Form von Rollenkontaktblöcken vorgesehen. Außerdem ist gut zu erkennen, wo der Magnet 14 in das Mittel 7 eingesetzt wird, wobei es sich dabei lediglich um eine beispielhafte Anbringungsmöglichkeit handelt.

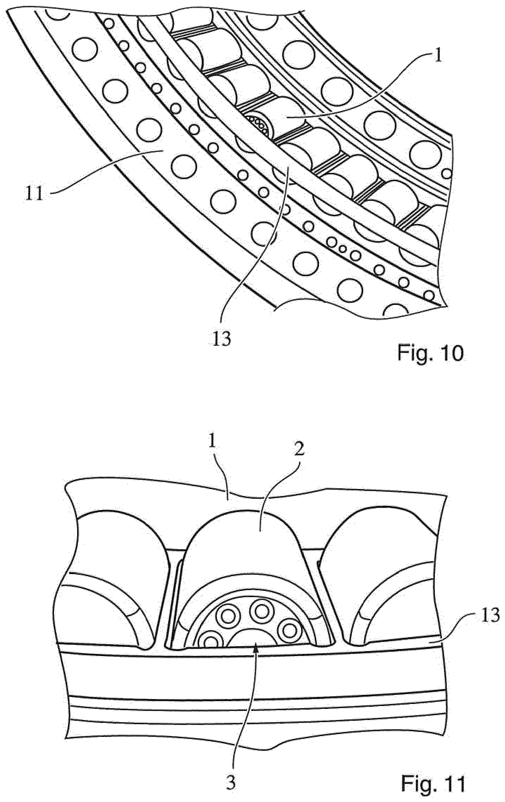

In **Figur 10** ist eine Perspektivansicht eines Wälzlagers gemäß einer beispielhaften Ausführungsform der vorliegenden Erfindung dargestellt. Hier handelt es sich dabei um ein Großwälzlager mit einem Außenring 11, einem hier aus Gründen der Übersichtlichkeit nicht dargestellten Innenring 12 und einem dazwischen angeordneten Käfig 13, der eine Vielzahl von Wälzkörpern umfasst und gleichmäßig voneinander beabstandet hält. Wenigstens ein Wälzkörper ist dabei ein Wälzkörper 1 im Sinne dieser Anmeldung, also eine Messrolle.

In **Figur 11** ist eine perspektivische Detailansicht eines Wälzlagers gemäß einer beispielhaften Ausführungsform der vorliegenden Erfindung dargestellt. Hier ist insbesondere ein erfindungsgemäßer Wälzkörper 1 neben zwei herkömmlichen Wälzkörpern dargestellt. Wie aus der Darstellung ersichtlich wird, weist der Wälzkörper 1 keine Verkabelung auf, er funktioniert autonom und übermittelt die Messdaten kabellos, so dass das Wälzlager beispielsweise von einem Gehäuse umschlossen sein kann und dennoch eine Belastungsmessung möglich ist.

Hierdurch kann das Großwälzlager beispielsweise in einer Windkraftanlage eingebaut werden und Belastungsmessdaten an eine Kontrolleinheit übermitteln, so dass ein Wartungsbedarf frühzeitig und ohne aufwändige Eingriffe in das Wälzlager erkannt werden kann.

### Bezugszeichenliste

- 1: Wälzkörper
- 2: Außenmantel
- 3: Bohrung
- 4: Mikrogenerator
- 5, 5': Sensor
- 6: Funkmodul
- 7, 7': Mittel zum Herstellen eines definierten Abstandes zu der Bohrungswandung
- 8: Platine
- 9: Dehnungsmessstreifen
- 10: Spulen
- 11: Außenring
- 12: Innenring
- 13: Käfig
- 14: Magnet
- 15: Käfigmagneten
- 16: Mittel zur Positionsbestimmung

- d: Verformung

## Patentansprüche

1. Wälzkörper (1) zur Verwendung in einem Wälzlager, mit einem Außenmantel (2) und einer Bohrung (3), wobei die Bohrung (3) entlang einer Mittelachse des Wälzkörpers (1) vorgesehen ist, wobei der Wälzkörper (1) wenigstens einen in der Bohrung (3) angeordneten Sensor (5) zur Belastungsmessung und ein Funkmodul (6) zur Übertragung der von dem Sensor (5) gemessenen Daten umfasst, wobei der Wälzkörper einen Mikrogenerator (4) umfasst, der zur Bereitstellung der zum Betrieb des Sensors (5) und/oder des Funkmoduls (6) benötigten Energie vorgesehen ist, wobei der Mikrogenerator (4) ein induktiver Generator ist, der dazu ausgebildet ist, mit Magneten zusammenzuwirken, die an einem Käfig eines Wälzlagers angeordnet sind, **dadurch gekennzeichnet, dass** eine Vielzahl von Spulen (10) auf einer Kreisbahn zwischen der Bohrung (3) und dem Außenmantel (2) angeordnet sind.

2. Wälzkörper (1) nach Anspruch 1, **dadurch gekennzeichnet, dass** der Sensor (5) ein kapazitiver Sensor ist, wobei der Sensor (5) zur Messung eines Abstands zwischen dem Sensor und der Bohrungswandung vorgesehen ist.

3. Wälzkörper (1) nach einem der vorhergehenden Ansprüche, **dadurch gekennzeichnet, dass** in der Bohrung (3) wenigstens zwei voneinander entlang der Mittelachse beabstandete Sensoren (5, 5') angeordnet sind.

4. Wälzkörper (1) nach einem der vorhergehenden Ansprüche, **dadurch gekennzeichnet, dass** in axialer Richtung auf der Höhe des Sensors (5), vorzugsweise diesem bezüglich der Mittelachse gegenüberliegend, ein Mittel (7) zum Herstellen eines definierten Abstandes zu der Bohrungswandung vorgesehen ist, wobei das Mittel (7) insbesondere einen Magneten (14) umfasst.

5. Wälzkörper (1) nach einem der vorhergehenden Ansprüche, **dadurch gekennzeichnet, dass** in der Bohrung (3) eine Platine (8) angeordnet ist, wobei das Funkmodul (6), der Mikrogenerator (4), der kapazitive Sensor (5) und/oder das Mittel (7) an der Platine (8) befestigt sind.

6. Wälzkörper (1) nach einem der vorhergehenden Ansprüche, **dadurch gekennzeichnet, dass** das Funkmodul (6) zur Übertragung der gemessenen Daten in einem Frequenzbereich von 100 MHz bis 6 GHz, vorzugsweise von 300 MHz bis 2 GHz, besonders bevorzugt von 700 MHz bis 1 GHz, insbesondere mit einer Frequenz von 833 MHz, vorgesehen ist.

7. Wälzkörper (1) nach einem der vorhergehenden Ansprüche, **dadurch gekennzeichnet, dass** die Bohrung (3) einen Durchmesser von 5 mm bis 50 mm, vorzugsweise von 10 mm bis 30 mm, insbesondere einen Durchmesser von 20 mm, aufweist, und/oder wobei der Wälzkörper vorzugsweise zylinderförmig ausgebildet ist und besonders bevorzugt eine Länge von 90 mm bis 110 mm, insbesondere 104 mm, sowie ganz besonders bevorzugt einen Durchmesser von 60 mm bis 70 mm, insbesondere 65 mm, aufweist.

8. Wälzkörper (1) nach einem der vorhergehenden Ansprüche, **dadurch gekennzeichnet, dass** an der Bohrungswandung, insbesondere in radialer Richtung wenigstens teilweise umlaufend, ein Dehnungsmessstreifen (9) angeordnet ist.

9. Wälzkörper (1) nach einem der vorhergehenden Ansprüche, **dadurch gekennzeichnet, dass** der Wälzkörper (1) ein Mittel zur Positionsbestimmung umfasst.

10. Wälzlager, insbesondere Großwälzlager, mit einem ersten Lagerring und einem um eine Drehachse drehbaren, und insbesondere konzentrisch zu dem ersten Lagerring (11) angeordneten zweiten Lagerring (12), sowie einer Vielzahl von zwischen dem ersten Lagerring (11) und dem zweiten Lagerring (12) angeordneten Wälzkörpern, **dadurch gekennzeichnet, dass** wenigstens ein Wälzkörper ein Wälzkörper (1) gemäß einem der vorhergehenden Ansprüche ist.

## Claims

1. A rolling element (1) for use in a rolling-element bearing, comprising an outer shell (2) and a bore hole (3), the bore hole (3) being provided along a centerline of the rolling element (1), the rolling element (1) having at least one sensor (5) arranged in the bore hole (3) for load measurement and a radio module (6) for transmitting the data measured by the sensor (5), wherein the rolling element has a micro-generator (4) being provided to provide the energy required for operation of the sensor (5) and/or of the radio module (6), wherein the micro-generator is an inductive generator configured to interact with magnets which are arranged on a cage of a rolling-element bearing, **characterized in that** a plurality of coils (10) is arranged on a circular path between the bore hole (3) and the outer shell (2).

2. The rolling element (1) as claimed in claim 1, **characterized in that** the sensor (5) is a capacitive sensor, the sensor (5) being provided to measure a distance between the sensor and the bore wall.

3. The rolling element (1) as claimed in any of the preceding claims, **characterized in that**, at least two sensors (5, 5') are arranged in the bore hole (3), which sensors (5, 5') are spaced apart from one another along the centerline.

4. The rolling element (1) as claimed in any of the preceding claims, **characterized in that**, in the axial direction, at the level of the sensor (5), preferably opposite said sensor with respect to the centerline, a means (7) for producing a defined distance from the bore wall is provided, the means (7) having in particular a magnet (14).

5. The rolling element (1) as claimed in any of the preceding claims, **characterized in that**, in the bore hole (3), a circuit board (8) is arranged, the radio module (6), the micro-generator (4), the capacitive sensor (5) and/or the means (7) being attached to the circuit board (8).

6. The rolling element (1) as claimed in any of the preceding claims, **characterized in that** the radio module (6) is provided to transmit the measured data in a frequency range of from 100 MHz to 6 GHz, preferably from 300 MHz to 2 GHz, particularly preferably from 700 MHz to 1 GHz, in particular at a frequency of 833 MHz.

7. The rolling element (1) as claimed in any of the preceding claims, **characterized in that** the bore hole (3) comprises a diameter of from 5 mm to 50 mm, preferably from 10 mm to 30 mm, in particular a diameter of 20 mm, and/or the rolling element preferably being cylindrical and particularly preferably comprising a length of from 90 mm to 110 mm, in particular 104 mm, and very particularly preferably a diameter of from 60 mm to 70 mm, in particular 65 mm.

8. The rolling element (1) as claimed in any of the preceding claims, **characterized in that**, on the bore wall, in particular in the radial direction, a strain gage (9) is arranged in an at least partially circumferential manner.

9. The rolling element (1) as claimed in any of the preceding claims, **characterized in that** the rolling element (1) has a means for determining position.

10. A rolling-element bearing, in particular a large rolling-element bearing, comprising a first bearing ring and a second bearing ring (12) which is rotatable about an axis of rotation and in particular is arranged concentrically with the first bearing ring (11), and a plurality of rolling elements arranged between the first bearing ring (11) and the second bearing ring (12), **characterized in that** at least one rolling element is a rolling element (1) as claimed in any of the preceding claims.

## Revendications

1. Elément roulant (1) destiné à être utilisé dans un palier à roulement, comprenant une enveloppe extérieure (2) et un alésage (3), l'alésage (3) étant prévu le long d'un axe médian de l'élément roulant (1), l'élément roulant (1) comprenant au moins un capteur (5) disposé dans l'alésage (3) pour la mesure de charge et un module radio (6) pour la transmission des données mesurées par le capteur (5), l'élément roulant comprenant un microgénérateur (4) qui est prévu pour fournir l'énergie nécessaire au fonctionnement du capteur (5) et/ou du module radio (6), le microgénérateur (4) étant un générateur inductif qui est réalisé pour coopérer avec des aimants qui sont disposés sur une cage d'un palier à roulement,
**caractérisé en ce qu'**une pluralité de bobines (10) est disposée sur une trajectoire circulaire entre l'alésage (3) et l'enveloppe extérieure (2).

2. Elément roulant (1) selon la revendication 1, **caractérisé en ce que** le capteur (5) est un capteur capacitif, le capteur (5) étant prévu pour mesurer une distance entre le capteur et la paroi d'alésage.

3. Elément roulant (1) selon l'une quelconque des revendications précédentes, **caractérisé en ce qu'**au moins deux capteurs (5, 5') espacés l'un par rapport à l'autre le long de l'axe médian sont disposés dans l'alésage (3).

4. Elément roulant (1) selon l'une quelconque des revendications précédentes, **caractérisé en ce qu'**au niveau du capteur (5), de préférence à l'opposé de celui-ci par rapport à l'axe médian, un moyen (7) pour établir une distance définie par rapport à la paroi d'alésage est prévu dans la direction axiale, le moyen (7) comprenant en particulier un aimant (14).

5. Elément roulant (1) selon l'une quelconque des revendications précédentes, **caractérisé en ce qu'**une platine (8) est disposée dans l'alésage (3), le module radio (6), le microgénérateur (4), le capteur capacitif (5) et/ou le moyen (7) étant fixés à la platine (8).

6. Elément roulant (1) selon l'une quelconque des revendications précédentes, **caractérisé en ce que** le module radio (6) pour la transmission des données mesurées est prévu dans une plage de fréquence de 100 MHz à 6 GHz, de préférence de 300 MHz à 2 GHz, de manière particulièrement préférée de 700 MHz à 1 GHz, en particulier avec une fréquence de 833 MHz.

7. Elément roulant (1) selon l'une quelconque des revendications précédentes, **caractérisé en ce que** l'alésage (3) présente un diamètre de 5 mm à 50 mm, de préférence de 10 mm à 30 mm, en particulier un diamètre de 20 mm, et/ou l'élément roulant étant de préférence réalisé en forme de cylindre et présentant de manière particulièrement préférée une longueur de 90 mm à 110 mm, en particulier de 104 mm, ainsi que de manière tout particulièrement préférée un diamètre de 60 mm à 70 mm, en particulier de 65 mm.

8. Elément roulant (1) selon l'une quelconque des revendications précédentes, **caractérisé en ce qu'**une jauge de contrainte (9) est disposée sur la paroi d'alésage, en particulier dans la direction radiale, de manière au moins partiellement périphérique.

9. Elément roulant (1) selon l'une quelconque des revendications précédentes, **caractérisé en ce que** l'élément roulant (1) comprend un moyen de positionnement.

10. Palier à roulement, en particulier couronne d'orientation, comprenant une première bague de palier et une deuxième bague de palier (12) pouvant tourner autour d'un axe de rotation et disposée en particulier de manière concentrique par rapport à la première bague de palier (11), ainsi qu'une pluralité d'éléments roulants disposée entre la première bague de palier (11) et la deuxième bague de palier (12), **caractérisé en ce qu'**au moins un élément roulant est un élément roulant (1) selon l'une quelconque des revendications précédentes.
